# EUROPEAN PATENT SPECIFICATION

(11) **EP 0 723 148 B1**
(45) Date of publication and mention of the grant of the patent: **30.07.2003**
(21) Application number: 96300177.1
(22) Date of filing: 10.01.1996
(51) Int. Cl.: G01N 27/20

(54) **Continuity tester and method**
Gerät und Verfahren zur Durchgangsprüfung
Méthode et détecteur de continuité

(30) Priority: 21.01.1995 GB 9501221
(43) Date of publication of application: 24.07.1996
(73) Proprietor: CarnaudMetalbox plc, Wantage, Oxon OX12 9BP (GB); CarnaudMetalbox SA, 93400 Saint Ouen (FR)
(72) Inventor: Burrows, Ivan Ronald, Wantage, Oxfordshire, OX12 ONE (GB)
(74) Representative: Ratliff, Ismay Hilary

(56) References cited:
- US-A- 2 322 228
- US-A- 3 417 327
- US-A- 3 555 414
- US-A- 4 206 407
- US-A- 4 894 251

## Description

This invention relates to a continuity tester and method. In particular, it relates to a continuity tester and method for examining the integrity of a lining of an organic or polymeric coating on containers.

One known apparatus for evaluation of internal lacquer quality in drawn wall-ironed tinplate containers is the so-called "enamel rater". The enamel rater evaluates the continuity of internal lacquer by providing a measure, in the form of an electrical current, of metal exposed through the lacquer. One form of this apparatus is described in US-A-4206407.

Known methods of testing metal exposure involve filling the container with a sodium chloride solution. The container is then connected to the positive terminal (anode) of a 6.3 volt dc power supply. The negative terminal (cathode) is connected to a steel or graphite electrode. This configuration is known as anodic testing since the container is connected to the anode. Metal exposure is measured by the current which flows 4 seconds after the supply is switched on. If there is metal exposure, it will cause a high current to flow.

These known methods and apparatus rely on the convention that metal exposure determines corrosion or iron pick-up in the electrolyte. It has, however, been found that such reliance was unfounded since not all problems were located even when tests appeared to give satisfactory results. Furthermore, such tests only identify presence of metal exposure and not exact location or low cross linking or uneven cover, lack of cleanliness under coating, poor lacquer adhesion or other problems related to the quality of the coating itself.

US-A-4,894,251 describes a continuity tester according to the preamble of claim 1. US-A-3,417,327 describes the use of an array based measuring system for detecting lining continuity for a plurality of containers simultaneously.

This invention seeks to provide a method of and apparatus for continuity testing which gives improved sensitivity over known systems and which does not rely on metal exposure to obtain a measure of coating quality.

According to the invention, there is provided a method of testing continuity of a container lining comprising: a) connecting the container to the negative terminal of a dc power supply; b) filling the container with an electrolyte solution; c) immersing a positive electrode in the electrolyte solution; and d) applying a dc voltage and measuring electrical current to assess lining quality; characterised in that the dc voltage of step (d) is a dc voltage of at least +3 volts applied for a minimum period of 3 minutes, the current being measured at the end of this period; and characterised by the further steps of e) reversing the polarity of the supply; f) connecting the container to the positive terminal and the electrode to the negative terminal; and g) observing current flow after a maximum of 60 seconds.

Preferably the dc voltage is applied for 5 minutes. The preferred dc voltage is 4.5 volts. It has surprisingly been found that lining or coating quality may be assessed using these conditions by observing blistering in the lining, where lining weakness was present. Furthermore, it was found necessary to apply the dc voltage for at least 3 minutes in order to show a large increase in current where lining quality is poor.

Whilst it was known to reverse electrode polarity for a few seconds so that the container was connected to the negative terminal, this was carried out merely to observe the presence of hydrogen bubbles rising from exposed metal. Such cathodic connections would not have been carried out under the conditions of the present invention which requires a long test period in order for blistering to occur.

In any corrosion reaction, there are two equal and opposite processes occurring. Firstly, there is the corrosion (anodic) reaction, where metal dissolves into the corrosive environment. This must be exactly balanced by a corresponding cathodic reaction. In the case of corroding steel, the cathodic reaction can be oxygen reduction, or any other reducible species.

The anodic and cathodic reactions can be summarized as:-

2Fe -) 2Fe2+ + 4e (anodic)

2H20 + 2e -) H2 + 20H- (cathodic)

In the case of a lacquered tin-plate container, the cathodic processes are thought to be associated with the lacquer. The processes can be transport of ionic and/or reducible species, through the lacquer, which in turn relate to lacquer blistering. Since the anodic and cathodic processes are equal and opposite either can control the rate of corrosion. However, it is generally accepted that corrosion in a lacquered tin-plate container is controlled by the rate of the cathodic reaction.

The method of the present invention, is based on the principle of identifying the extent to which lacquer or other coating is susceptible to the cathodic reaction. These weak areas can be seen as lacquer blisters, after the test has been completed. The weak areas may be where cross-linking or lacquer coverage is low, or where lacquer adhesion is poor, due to the presence of contamination on the can surface.

The method may further comprise initially connecting the container to the positive terminal and the electrode to the negative terminal, observing current flow after a maximum of 60 seconds, preferably after 4 seconds and reversing the polarity of the supply prior to carrying out the above method. This preliminary conventional anodic testing stage is usually carried out using a dc voltage of at least 6 volts. Reversing polarity may therefore also involve reducing applied potential, typically from 6.3 volts for anodic testing to 4.5 volts for cathodic testing. An initial anodic test gives some indication of metal exposure but a longer cathodic test is necessary so as to identify weak areas of lining by current flow changes and blistering. Iron pick-up is more readily identified by the longer cathodic test method and particular success is attained when the preferred voltage and test period noted above is used.

Particular factors which the method of the present invention can be used to identify in coating quality are, for example, unevenness in coating cover; differences in cure of the coating, particularly between stoving ovens; cleanliness under the coating, particularly where the coating layer is thick, as in the so-called wet-on-wet process; and contamination by a peg tip when the container is held on a peg during curing of a coating or decoration.
According to a further apparatus for testing lining continuity in a container, comprising: a dc power supply for supplying a potential difference across its positive and negative terminals; a first electrode for connection to the container; a second electrode for immersion in electrolyte within the container; means for connecting the first electrode to the negative terminal of the power supply; means for connecting the second electrode to the positive terminal of the power supply; and means for measuring the electrical current; characterised in that the apparatus is for testing lining continuity in a plurality of containers, the electrodes are electrode arrays, the first electrode array being for connection to each of the containers and the second electrode array being for immersion in electrolyte within each respective container; and characterised by means for applying a potential difference of at least 3 volts dc for a minimum of 3 minutes prior to measuring the electrical current; and means for reversing polarity and concurrently changing potential of the dc power supply whereby the first electrode array is connected to the positive terminal of the power supply and then to negative terminal of the power supply, or vice versa and in which, when the first electrode array is connected to the positive terminal, the application and measuring means applies a potential difference of at least 6 volts dc for a maximum of 60 seconds.

Preferred conditions are as described for the method of testing lining continuity.

The invention will now be described by way of example only, with reference to the examples and figures, in which:
Example 1 is an evaluation of lacquers in drawn wall-ironed (DWI) tinplate beverage cans;
Example 2 is an evaluation of lacquers at different stages of cure in DWI tinplate beverage cans;
Example 3 is an evaluation of wet-on-dry lacquering processes in DWI tinplate beverages cans;
Example 4 is an evaluation of process variables in the manufacture of DWI tinplate beverage cans; and
Example 5 is an evaluation of internal coating quality of laminate DWI tinplate beverage cans;
Figure 1 is a fragmentary section of metal coating at a blister site;
Figure 2 is a bar chart showing mean cathodic current for controls and trial lacquers in unfilled cans;
Figure 3 is a graph of mean cathodic current for unpacked can variables plotted against mean iron pick-up for the same variables for cans packed with lager for one month stored at ambient temperature;
Figure 4 is a like graph to figure 3 but arising from packed cans stored at 55°C;
Figure 5 is a graph of iron pick-up at ambient temperature against iron pick-up at 55°C after one month;
Figure 6 is the bar chart of figure 2 for filled cans tested with their easy open ends as container base (EOE down);
Figure 7 is a like graph to figure 3, for packed can variables stoved EOE down;
Figure 8 is a graph of cathodic current against iron pick-up for individual cans stored at ambient temperature (EOE down) for one month;
Figure 9 shows a graph of actual iron pick up against iron pick up predicted from electrochemical parameters;
Figure 10 is a graph of cathodic current against anodic current;
Figure 11 is a graph of mean cathodic current showing the effect of voltage and cure level;
Figure 12 is a graph of mean final anodic current against degree of lacquer cure showing the effect of voltage and cure level;
Figure 13 is a graph of square root of corrosion rate against cathodic current showing regression line;
Figure 14 is a bar chart showing mean cathodic current for varying laminate thicknesses; and
Figure 15 is a schematic of a multiheaded tester for process sampling of DWI tinplate cans.

### Example 1

For the purpose of testing, lacquer was applied to each can by one of several methods of application. These methods are defined as follows:
1 - a thick single layer coating applied in a single pass of can from washer to sprayer to oven, sprayed twice (single pass "wet-on-wet");
2 - a two layer coating applied in a two pass of can from washer to sprayer to oven and then to sprayer and oven once more (two pass "wet-on-dry"); or
C - two controls (Cₓ and C_{y}) sprayed with Dexter 4010WO6MP applied in a wet-on-wet process.

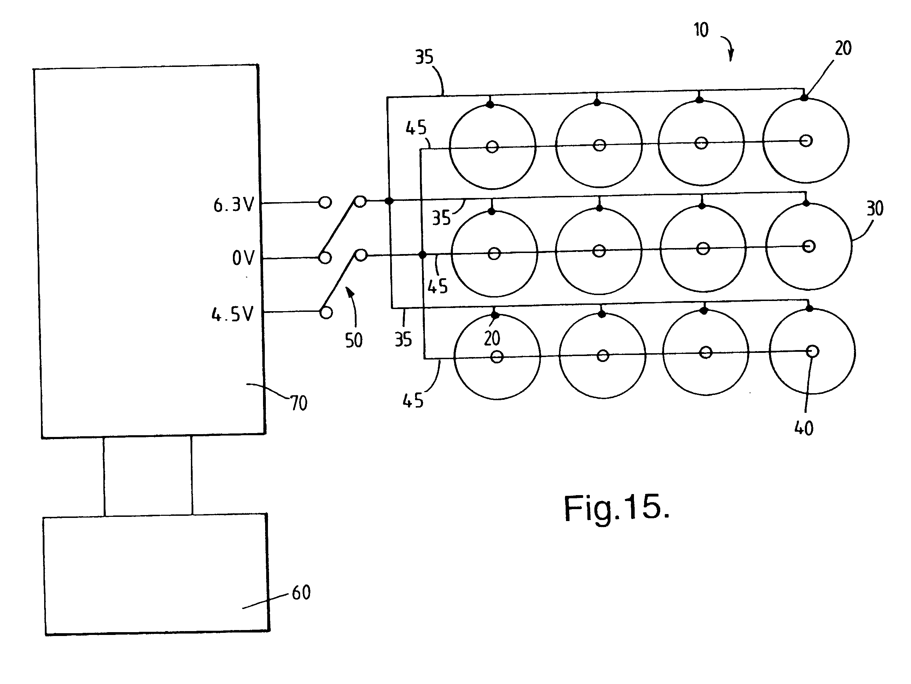

Using the apparatus of figure 15, each of four drawn and wall ironed tinplate cans were tested, each having an internal coating lacquers A, B, C or D obtained from different manufacturers as follows:
A - BASF SH 3968 E
B - Holden RD 46900
C - Dexter 4030WO1 D
D - IP 2289-820

Each can was connected to the positive terminal of a 4 volt dc power supply and filled with a solution of 5g/l sodium chloride in de-ionised water. A graphite rod as cathode was inserted into the solution and connected to the negative terminal. Current was measured on an X-Y-t recorder over a period of 60 seconds. Polarity was then reversed and current measured for a further 5 minutes.

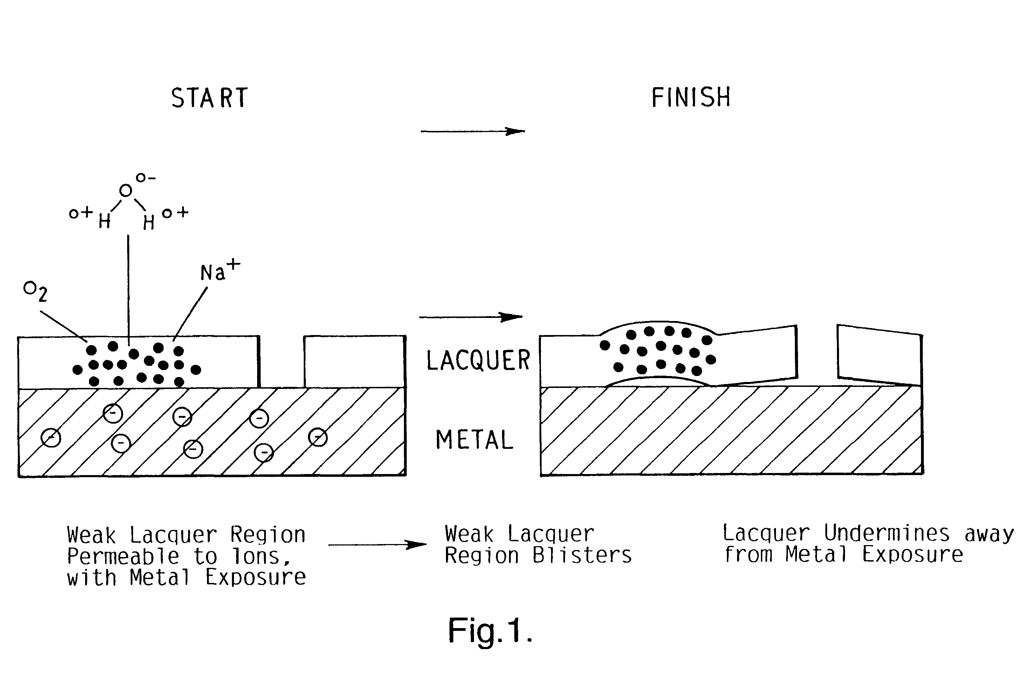

During cathodic testing cathodically weak areas which contain low resistance pathways, due to low cross-link density or thin lacquer cover, blister or lift away from existing metal exposure as shown in figure 1.

Under the influence of the applied cathodic (negative) voltage, water molecules and sodium ions migrate rapidly through weak lacquer areas to the metal interface. Oxygen also migrates through lacquer areas to metal interface unaffected by the electric field. Once at the metal interface the water breaks down to form hydrogen gas and hydroxyl ions. There is then a build-up of pressure, and a strongly alkaline solution of sodium hydroxide forms, which causes further breakdown of the lacquer at the interface. This additional breakdown in combination with the pressure built up causes lacquer blistering.

### 1.1. Unpacked Cans

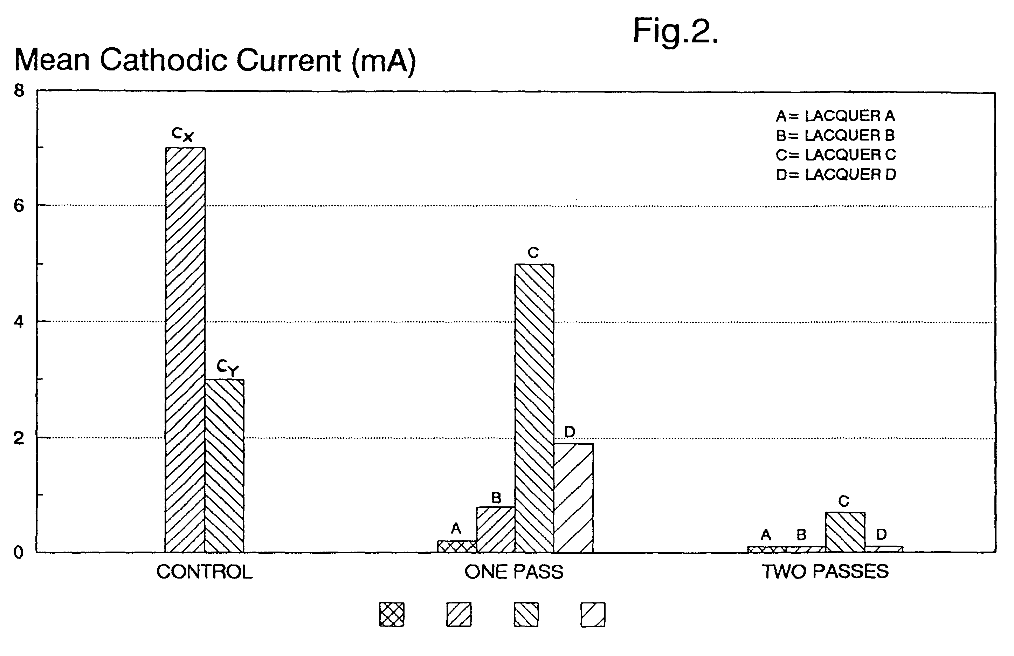

The anodic and cathodic testing (anodic enamel rater and cathodic enamel rater) responses of unpacked cans, ie. cans which have never been filled with a product, were measured. Figure 2 shows values of cathodic response as shown by measured current in mA for each can and lacquer variable plotted in the form of a bar chart. The controls are clearly different, with control Cₓ giving a significantly higher cathodic response. This indicates time dependent variation in the lacquering process or in the quality of the unlacquered cans.

For one pass of the trial lacquers, can lacquer C gives the highest cathodic response. The results suggest that can lacquer D gives a higher response than either of can lacquers A or B.

For trial of lacquers applied in two passes, lacquer C gives the highest response. Lacquers A, B and D give lower, and similar responses.

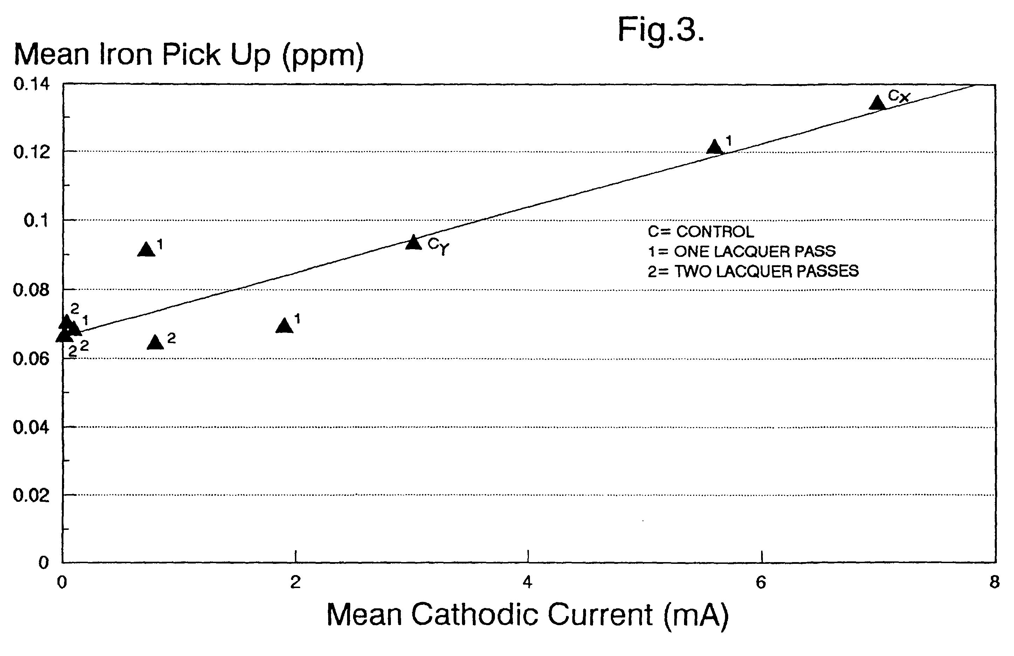

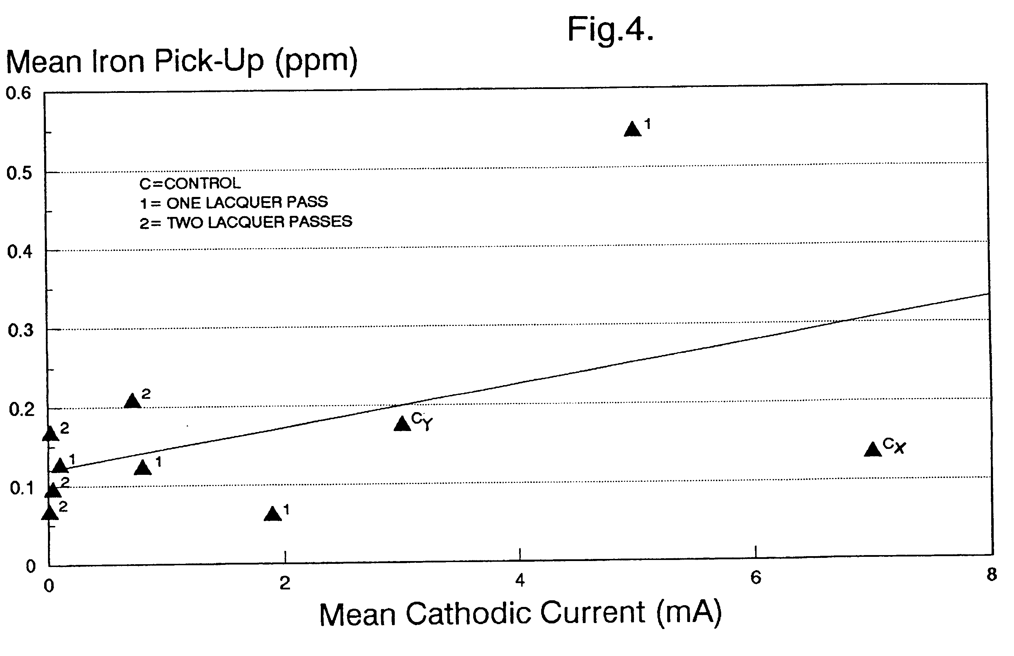

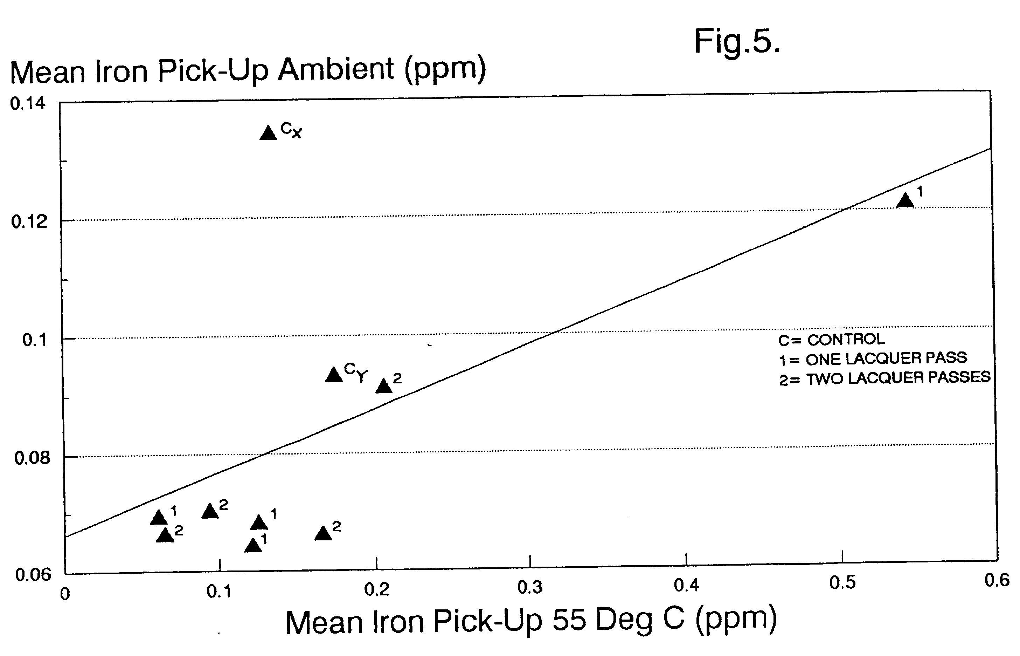

These cathodic testing results were correlated with one month pack test iron pick-up data for the same batches of cans, filled with lager. The iron pick-up data was measured at both ambient and 55°C and associated cathodic enamel rater readings taken. The relationship between cathodic current mean and iron pick-up mean at ambient for different lacquer application methods is shown in figure 3. It can be seen that after one month at ambient temperature, the cathodic enamel rater is a good predictor of iron pick-up. Correlation of the cathodic enamel rater with iron pick-up after one month at 55°C is shown graphically in figure 4. In this instance the correlation is not as good as at ambient. Figure 5 shows the mean iron pick-up at ambient plotted against the mean iron pick-up at 55°C, with the regression line. Clearly, the point for the control Cₓ having high response at ambient is the worst fit. Compared to the other variables on the graph this control does not have the same systematic increase in iron pick-up at 55°C over ambient.

This control Cₓ appears to have been behaving anomalously. If the point for the control Cₓ is removed from figure 4, the correlation again becomes highly significant.

### 1.2 Can tested Easy Open End (EOE) down

The anodic and cathodic enamel rater and polarisation resistance values on packed cans ie having been filled with lager, were measured with easy open end as container base, ie. EOE down. The easy open end was made of aluminium alloy. Analysis of variance was carried out to determine which measurement was the best discriminator of the can variables. The anodic enamel rater discriminated least well, followed by polarisation resistance. The best discriminator was the cathodic enamel rater.

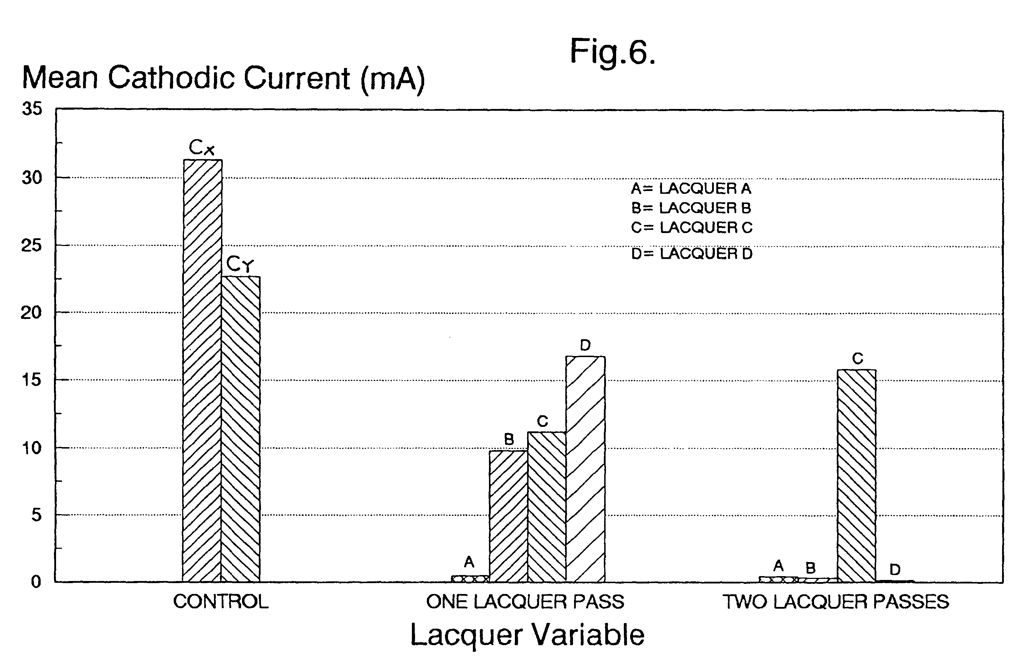

Figure 6 shows the values of the cathodic current means for each variable, plotted in the form of a bar chart. As for unpacked cans, the controls give the highest response. Overall the current level is about five times higher than for unpacked cans. For one pass, the lacquer A gives the lowest response. For two lacquer passes, the cathodic responses of lacquers B and D greatly reduce, but the lacquer C gives easily the largest response.

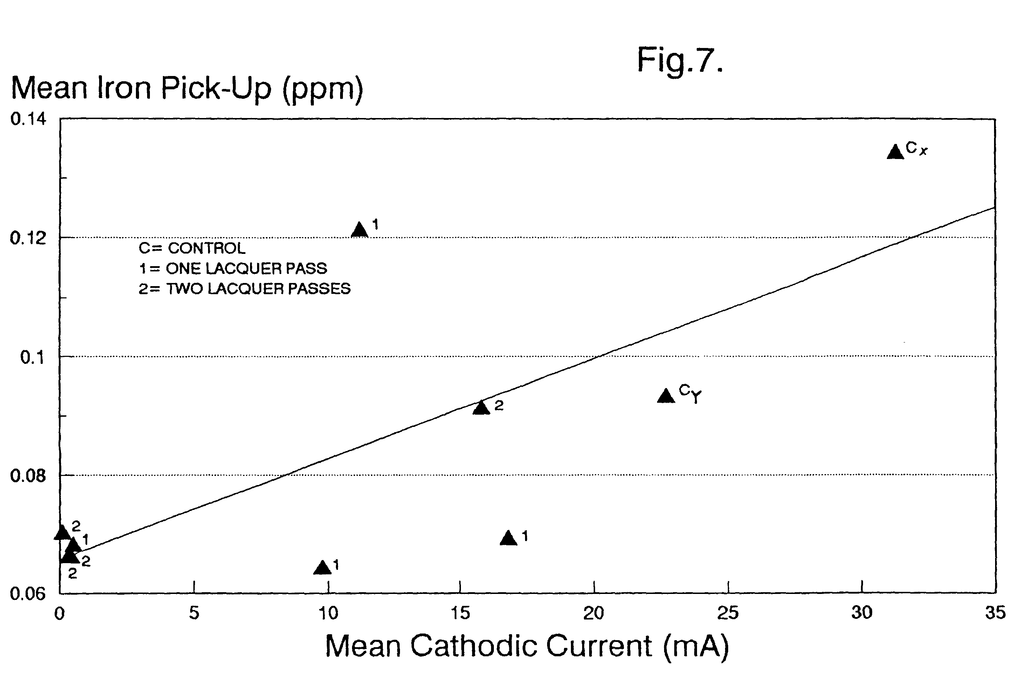

These cathodic enamel rater results were correlated with the one month pack test data for cans filled with lager. The regression analysis is shown in figure 7. The regression is significant with 53% of the variance explained by the correlation indicating there is some other contributing factor. The correlation is clearly not as good as for the unpacked cans. The reason for this, and the fact that the overall current level is about five times higher than the unpacked cans was found to be that there had been significant metal exposure on the EOE around its score line and rivet prior to the cans being tested.

### 1.3 Cans tested EOE down individually after one months packing

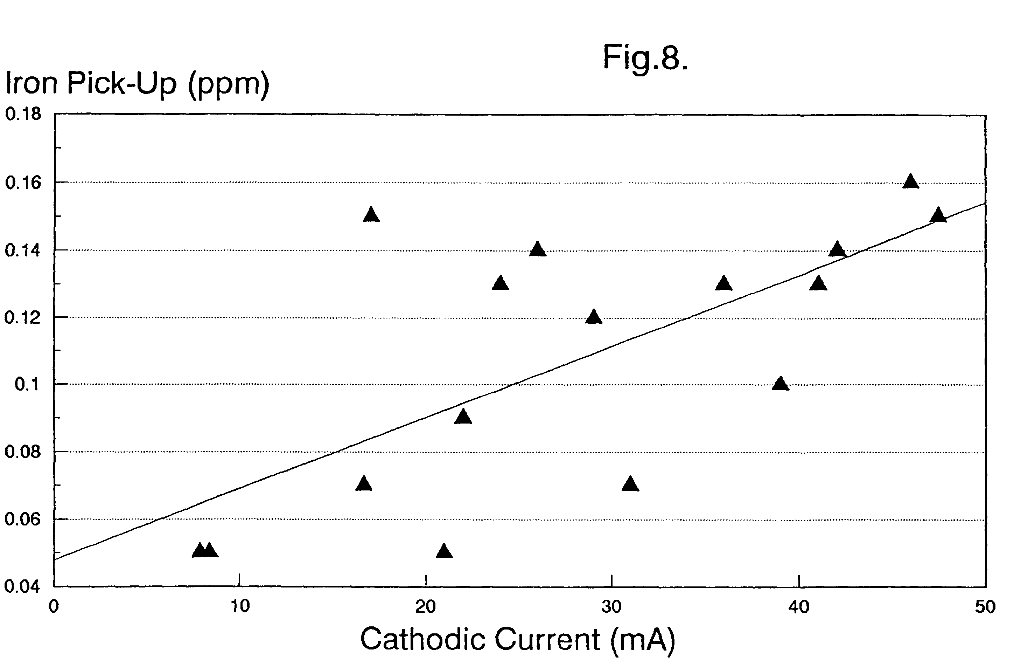

The anodic and cathodic enamel rater and polarisation resistance values on individual cans were measured EOE down, after one months pack test in lager. The results from each can were then correlated with their individual iron pick-up values. A regression analysis of cathodic current against iron pick-up at ambient is shown in figure 8. The regression is significant, but with only 47% of the total variance explained by the correlation. This is a similar result to the groups of cans that were tested EOE down, discussed in 1.2, in which metal exposure prior to testing lead to anomolities.

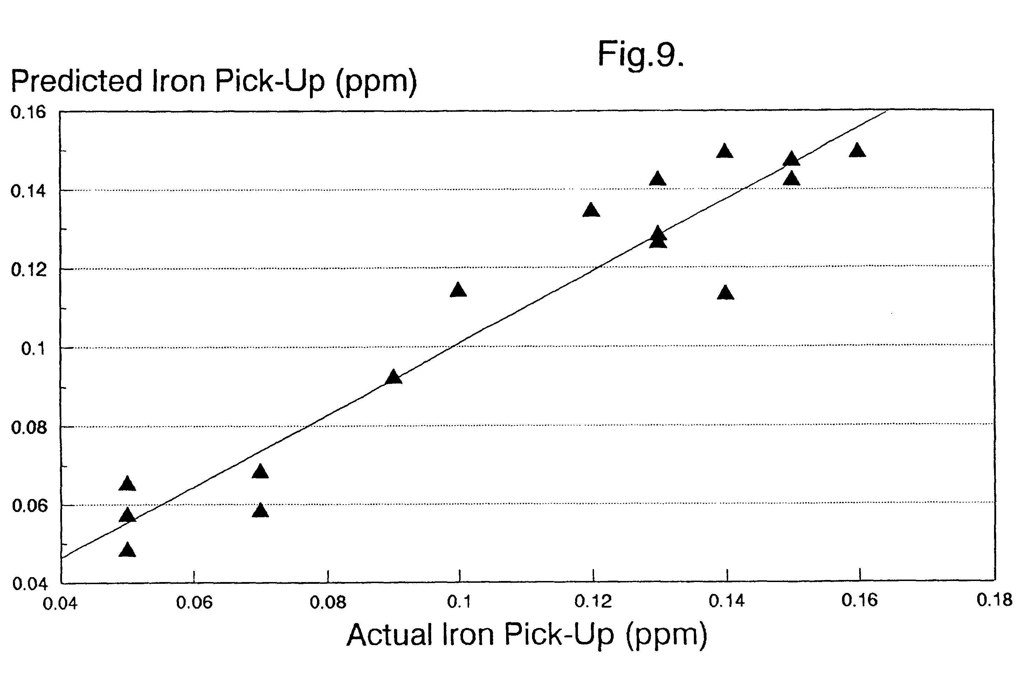

In an attempt to improve the correlation, a multiple regression analysis on iron pick-up was carried out, that included the anodic enamel rater and polarisation resistance tests. The variance explained improved to 91.5%. Figure 9 shows the predicted iron pick-up from the multiple regression analysis plotted against the actual iron pick-up. Thus iron pick-up can be predicted with a high degree of confidence by taking into account all three measured parameters namely the cathodic current, anodic current (indicating metal exposure) and polarisation resistance (indicating resistance to corrosion).

In summary, for unpacked cans a good correlation was found of cathodic enamel rater response with iron pick-up after one months pack test at ambient temperature. Correlation was less good but still statistically significant for cans tested easy open end (EOE) down, immediately after packing. A very good correlation was found for cans tested individually after one month pack test EOE down by including other electrochemical techniques in the regression analysis.

### Example 2

Three different cans, ie. each having a different lacquer were tested at various states of cure using a similar testing method to that of example 1 to establish optimum test conditions of voltage and time. Lacquer A was Dexter 4030OWO1D, lacquer B was Holdens 46900 and control lacquer C was Dexter 4010WO6MD. Either 6V or 4.5V was imposed at different cure levels. Since cathodic current tended to increase with time, unlike anodic current which remained fairly steady, the current after five minutes was taken to be a measure of the susceptability of the can to the cathodic reaction.

An anodic test (can positive) was made for one minute giving a current measurement A1. This was followed by a cathodic test (can negative) for five minutes giving a current measurement C and finally a further anodic test for one minute giving current A2. Current A2 gives an indication of metal exposure once the cathodic weaknesses have been exposed.

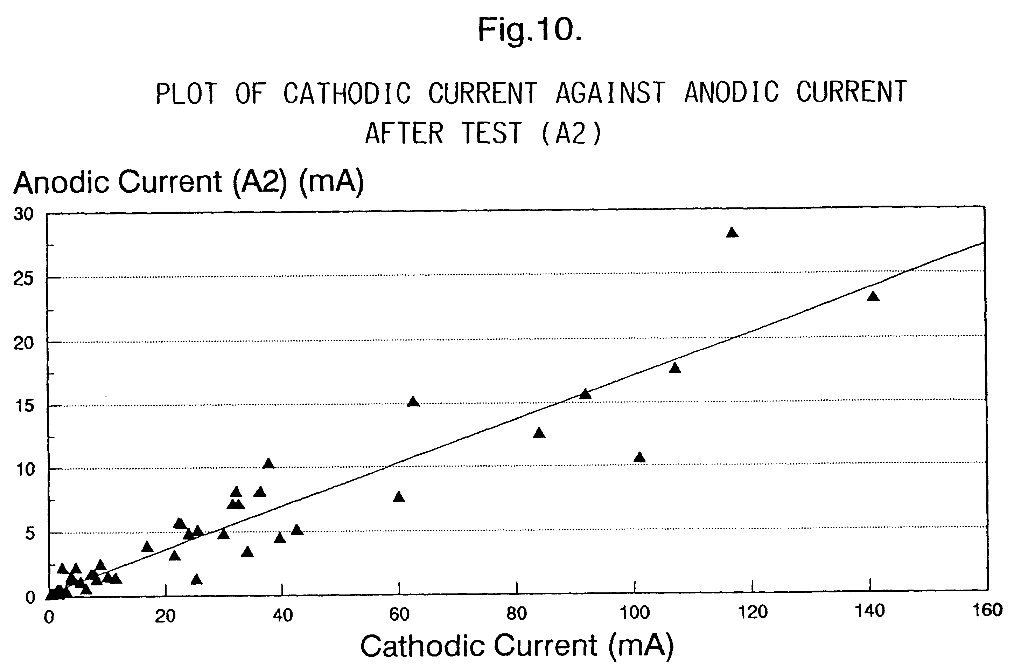

Regression anaylsis of cathodic current (C) and the final anodic current (A2) showed that there was a very highly significant correlation between C and A2. The values were plotted, showing the regression line in figure 10. This correlation indicates that the final anodic current (A2) is a measure of metal exposure, after lacquer has delaminated at the cathodically weak areas. No correlation was found between the measure of initial metal exposure (A1) and the cathodic current (C). This shows that the initial metal exposure does not influence cathodic susceptability of the lacquer. Thus the cathodic enamel rater can be considered to be a distinctly separate measure of can performance from metal exposure.

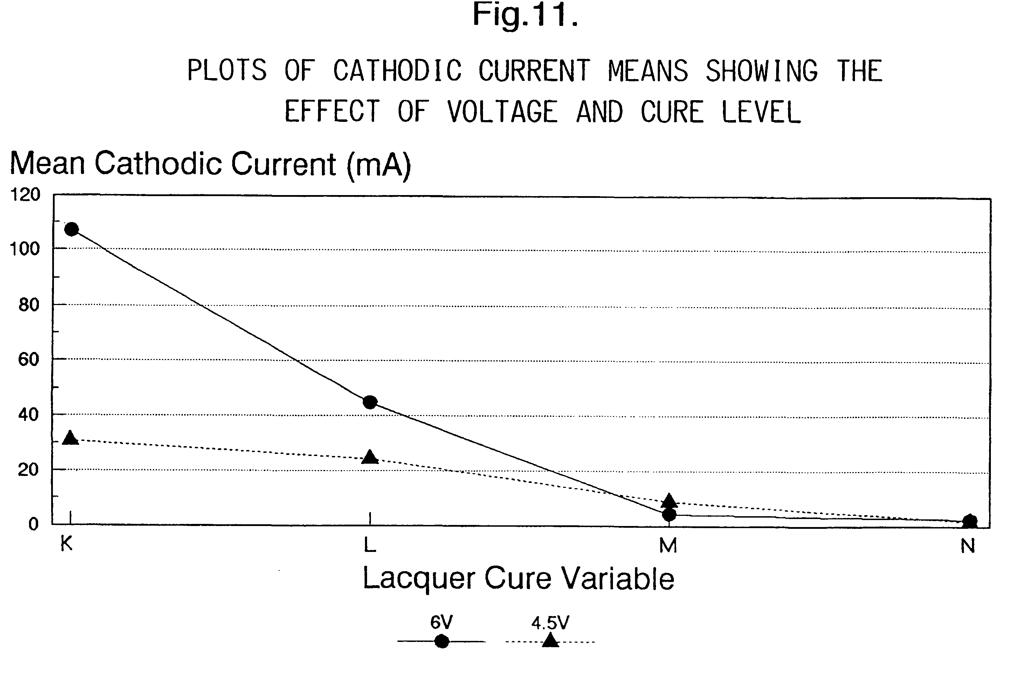

A plot of mean cathodic current at both voltages, for each cure level (increasing K to N) is shown in Figure 11. Analysis of variance confirms that the effects seen in Figure 11 are statistically significant, the largest effect being degree of cure, followed by applied voltage. There is also a smaller, but highly significant interaction between cure and voltage. Figure 11 suggests that the interaction occurs at low levels of cure (K and L), where the 6V and 4.5V lines diverge.

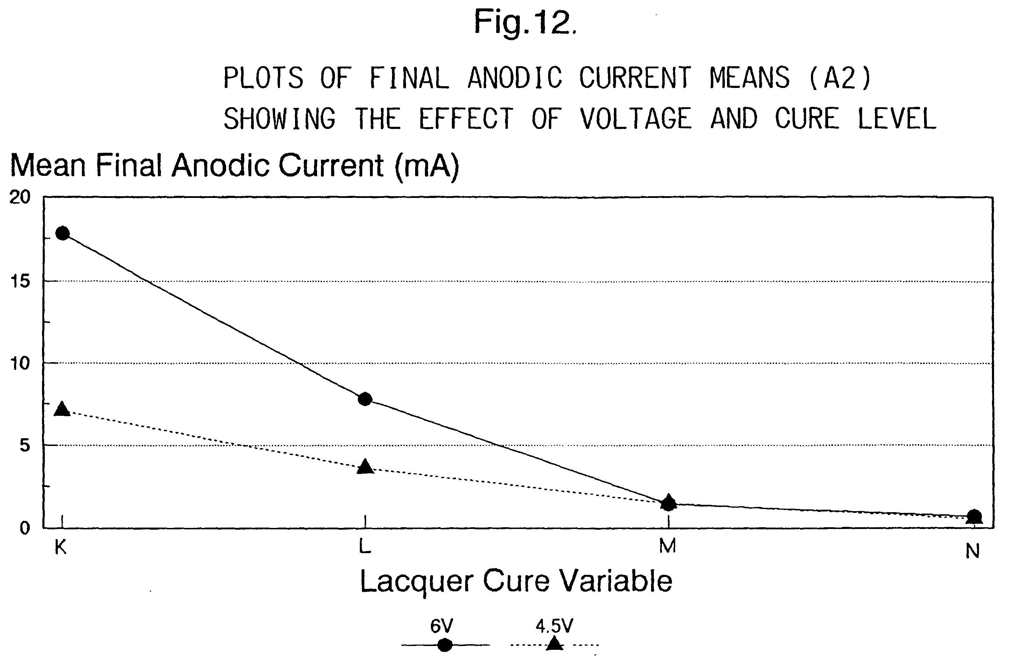

An analysis of variance was then carried out to show effect of voltage and cure level of final metal exposure as measured by the anodic current (A2). Significant effects due to applied voltage, cure level and an interaction between voltage and cure level were observed. The magnitude of these effects is shown in figure 12 where mean values of A2 are plotted at both voltages for each cure level. Figure 12 shows again that interaction occurs at low levels of cure (K and L), where the 6V and 4.5V lines diverge.

Comparison of the analysis of variance indicates that cathodic current at 5 minutes is a better measure of the effect of voltage and cure level than final anodic current. Cathodic current was measured after five minutes for all further investigations.

An applied voltage of 4.5 volts was chosen for three reasons. Firstly, at 4.5 volts, better discrimination was possible of the higher cure level variables (see figure 11). Secondly, at 4.5 volts the overall variance is lower. Finally, the lower applied voltage of 4.5V is likely to reflect more realistically the actual cathodic processes that occur in a lacquered can.

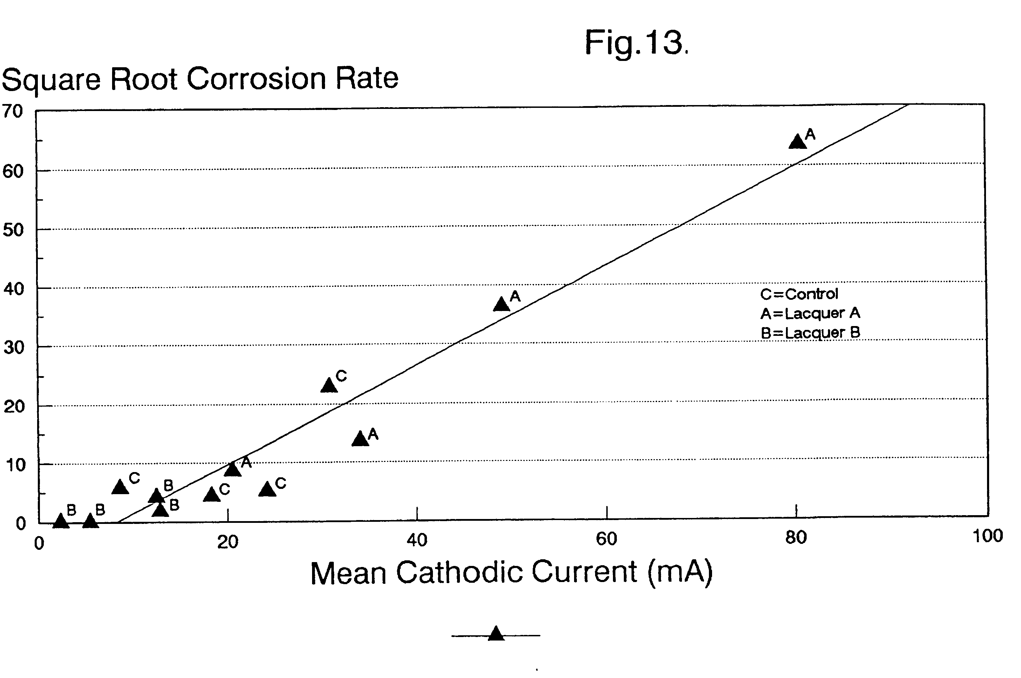

Cathodic response of five different states of cure was noted for three cans and subsequent analysis showed highly significant effects of lacquer type, cure and interaction between the two. Relationship between corrosion and cathodic current was investigated by scratching cans before testing and time taken to perforate was monitored. Most significant correlation was found by plotting the square root of corrosion rate against cathodic current as shown in figure 13.

In undercured cans, blistering was seen over most of the can wall surface but was most apparent at the neck region. As degree of cure increased, less blistering occurred but blisters were still present in the neck region.

Observations indicate that the test identifies cathodically susceptible areas which control corrosion within the can. The test is further able to identify can variables which are likely to result in lower iron pick-up in conventional anodic enamel raters.

### Example 3

In a factory having two coating lines, similar tests were carried out to evaluate DWI cans coated by a wet-on-dry lacquering process in which the cans pass from washer to a first sprayer to a first oven and then to a second sprayer and a second oven once more. Cans from both lines were evaluated after both spray (lacquer) passes and spray machines applying the first lacquer pass were then tested individually. Measurement of lacquer distribution by individual spray machines was also carried out using the process of the present invention.

After the second pass, cans from one line gave initially higher cathodic test values than from the other line. Over the period of the trial, the values from each line became similar. A time dependent effect was seen on both lines after the first pass. Monitoring spray machines after the first pass highlighted significant differences between spray machines. Film weight checks indicated that the test is most sensitive to low lacquer coverage at the upper side wall of the cans.

Spray machines were overhauled and further investigations carried out to identify anomalies between lines and spray machines. Cathodic values on the line with previously high values decreased significantly. Replacing spinners in the spray machines improved evenness of lacquer coverage and this proved beneficial in reducing cathodic values. Increased stoving on the line with lower cathodic values proved to be the reason for these lower values. Significant differences were also noted between second pass spray machines.

None of these factors could have been detected using conventional quality control methods such as the anodic enamel rater.

### Example 4

The cathodic tester was used to optimise lacquer process by monitoring different wash chemicals, adjusting existing nozzles and using alternative nozzles to increase lacquer coverage at the upper side wall on the first lacquer pass. The tester was also able to confirm that optimised settings were used prior to the trial.

The tester demonstrated the benefit of a particualar wash chemical and was able to provide information on other process variables which was hitherto unavailable using traditional test methods.

### Example 5

The cathodic tester was used to assess cans manufactured from a metal/polymer film laminate called Ferrolite (trademark) comprising an internal (ie. within the can) layer of PET, 0.2l gauge steel and an external layer of white PET.

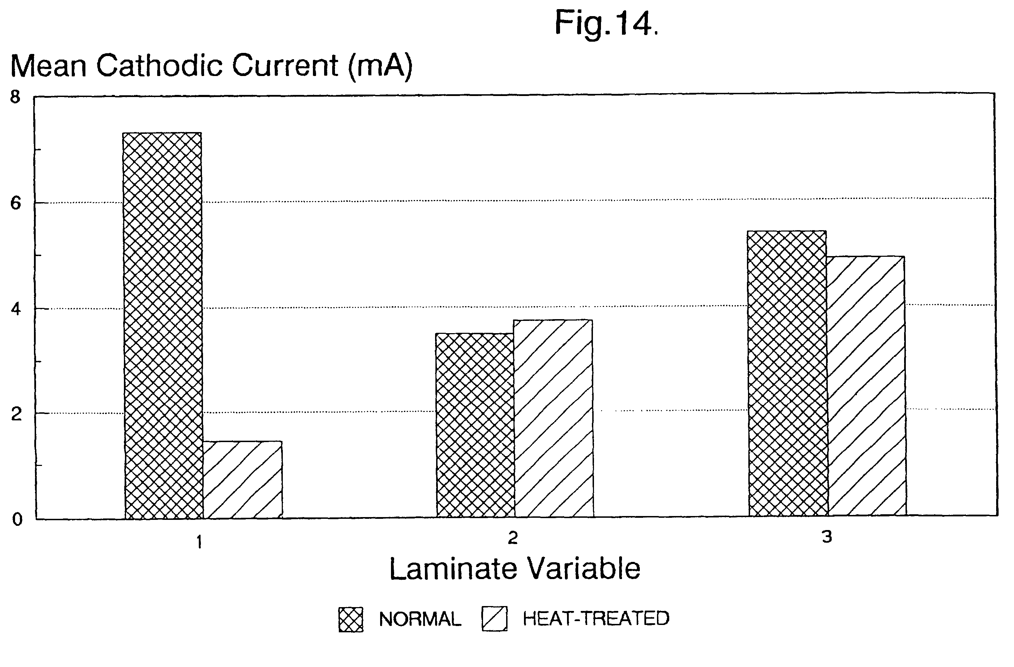

The cans were filled with 10g/l NaCl, end seamed on and processed. The ends were then removed and the cans tested at 4.5V for 15 minutes. Mean cathodic current for cans having (1) 15um PET, (2) 20um PET and (3) 16um PET as internal layer was measured to assess response from cans formed from both untreated laminate (normal) and cans formed from laminate after heat treatment. Heat treatment comprised heating the unformed laminate to a temperature of 95°C for 10 minutes and then forming into cans within 30 to 45 minutes so as to eliminate the possiblity of changes due to storage. The results are shown in Figure 14.

The examples of the present invention clearly show that many factors can be identified by the tester to show where improvements can be made. In particular, it was shown that low lacquer coverage at the upper side wall was a problem and that improved lacquer spraying was required in order for the cans to be able to maintain good coverage after seaming of the can end etc. Further parameters also have an impact on performance, such as wash chemical stove temperatures and contamination which is not apparent on visual inspection. Processes can thus be optimised and cans having individual problems identified, particularly when using the multi-headed tester described below.

An apparatus for testing lining continuity in twelve cans simultaneously is shown in figure 15. A multi-headed tester 10 comprises an array of connectors 20 to each of which a can 30 is connected for testing. Positive electrodes 40 comprise stainless steel rods which are inserted into the centre of respective cans 30 and are maintained about 5cm above the can base. The positive electrodes 40 are connectable via switch 50 to either 4.5V (for cathodic testing) or 0V (for anodic testing) and the cans 30 are connectable via switch 50 to 0V (for cathodic testing) or 6.3V (for anodic testing). Power is obtained from power supply unit 60 via a timing and measuring unit 70.

The positive electrodes 40 are connected to a hinged head (not shown) so that the electrodes 40 can be raised or lowered into the cans as required. This head can be set at different heights according to the height of can to be tested. Electrical connections 45 pass along the head to each row of electrodes. Similarly, connections 35 connect each row of cans to the power supply 60 via switch 50 and unit 70.

In use, each can is filled with 5g/l NaCl and switch 50 moved so that the 4.5V terminal is connected to the electrodes and the OV terminal to the cans. The timing and measuring unit includes an array display which confirms that electrical continuity is achieved. Timing circuitry ensures that the voltage is applied for 5 minutes. On completion of the 5 minutes, the reading for each can can be displayed in turn either by manual selection or automatically. Anodic testing can then be conducted by moving switch 50. Unit 70 resets the timing to 4 seconds for the anodic test and readings are displayed in a similar manner.

It will be realised that the multiheaded tester can be adapted to be fully automatic by microprocessor circuitry, for example, in order to be suitable for commercial in-line testing.

The invention has been described above by way of example only and that changes may be made without departing from the scope of the invention as defined in the appended claims.

## Claims

1. A method of testing continuity of a container lining comprising:
a) connecting the container (30) to the negative terminal of a dc power supply (60);
b) filling the container (30) with an electrolyte solution;
c) immersing a positive electrode (40) in the electrolyte solution; and
d) applying a dc voltage and measuring electrical current to assess lining quality;
**characterised in that**:
the dc voltage of step (d) is a dc voltage of at least +3 volts applied for a minimum period of 3 minutes, the current being measured at the end of this period;
and **characterised by** the further steps of:
e) reversing the polarity of the supply;
f) connecting the container to the positive terminal and the electrode to the negative terminal; and
g) observing current flow after a maximum of 60 seconds.

2. A method according to claim 1, comprising initially carrying out steps (f) and (g), and then reversing the polarity of the supply [step (e)] prior to carrying out the steps (a) to (d).

3. A method according to claim 1 or claim 2, in which the dc voltage is applied for 5 minutes.

4. A method according to any one of claims 1 to 3, in which the dc voltage is 4.5 volts.

5. An apparatus for testing lining continuity in a container (30), comprising:
a dc power supply (60) for supplying a potential difference across its positive and negative terminals;
a first electrode for connection to the container;
a second electrode for immersion in electrolyte within the container;
means for connecting the first electrode to the negative terminal of the power supply;
means for connecting the second electrode to the positive terminal of the power supply; and
means for measuring the electrical current;
**characterised in that**:
the apparatus is for testing lining continuity in a plurality of containers (30), the electrodes are electrode arrays, the first electrode array being for connection to each of the containers and the second electrode array being for immersion in electrolyte within each respective container;
and **characterised by**:
means for applying a potential difference of at least 3 volts dc for a minimum of 3 minutes prior to measuring the electrical current; and
means for reversing polarity and concurrently changing potential of the dc power supply, whereby the first electrode array is connected to the positive terminal of the power supply and then to the negative terminal of the power supply, or vice versa;
and in which, when the first electrode array is connected to the positive terminal, the application and measuring means applies a potential difference of at least 6 volts dc and for a maximum of 60 seconds.

6. An apparatus according to claim 7, in which the application and measuring means comprises a timing and measuring unit (70).

## Patentansprüche

1. Verfahren zur Durchgangsprüfung einer Behälterauskleidung, welches aus den folgenden Schritten besteht:
(a) Verbinden des Behälters (30) mit dem negativen Anschluss einer Gleichspannungsquelle (60);
(b) Füllen des Behälters (30) mit einer Elektrolytlösung;
(c) Eintauchen einer positiven Elektrode (40) in die Elektrolytlösung und
(d) Anlegen einer Gleichspannung und Messung des elektrischen Stromes, um die Qualität der Auskleidung zu ermitteln,
**dadurch gekennzeichnet,**
- **dass** die Gleichspannungsquelle des Schrittes (d) eine Gleichspannung von wenigstens 3 V ist, die während einer Zeitspanne von wenigstens 3 Minuten eingeschaltet wird, wobei der Strom am Ende dieser Zeitspanne gemessen wird, **gekennzeichnet** ferner durch die folgenden Schritte:
(e) Umkehren der Polarität der Energieversorgung;
(f) Verbinden des Behälters mit dem positiven Anschluss und der Elektrode mit dem negativen Anschluss und
(g) Beobachtung des Stromes während höchstens 60 Sekunden.

2. Verfahren nach Anspruch 1, gemäß welchem anfänglich die Schritte (f) und (g) ausgeführt werden, wobei anschließend die Polarität der Energieversorgung (Schritt (e)) umgekehrt wird, und zwar vor Ausführung der Schritte (a) bis (d).

3. Verfahren nach Anspruch 1 oder 2, wobei die Gleichspannungsquelle während 5 Minuten eingeschaltet ist.

4. Verfahren nach einem der Ansprüche 1 bis 3, bei welchem die Gleichspannung 4,5 V beträgt.

5. Vorrichtung zur Durchgangsprüfung der Auskleidung in einem Behälter (30), mit
einer Gleichspannungsquelle (60) zur Bereitstellung einer Potentialdifferenz zwischen ihren positiven und negativen Anschlüssen;
einer ersten Elektrode zur Verbindung mit dem Behälter;
einer zweiten Elektrode zum Eintauchen in einen Elektrolyten innerhalb des Behälters;
Mitteln zur Verbindung der ersten Elektrode mit dem negativen Anschluss der Spannungsquelle;
Mitteln zur Verbindung der zweiten Elektrode mit dem positiven Anschluss der Spannungsquelle und
Mitteln zur Messung des elektrischen Stromes,
**dadurch gekennzeichnet,**
- **dass** die Vorrichtung zur Durchgangsprüfung der Auskleidung einer Vielzahl von Behältern (30) eingerichtet ist, wobei die Elektroden Elektrodenanordnungen sind, wobei die erste Elektrodenanordnung zur Verbindung mit einem jeden der Behälter und wobei die zweite Elektrodenanordnung zum Eintauchen in die Elektrolyten innerhalb eines jeden jeweiligen Behälters eingerichtet sind, ferner **gekennzeichnet durch**
- Mittel zur Anlegung einer Potentialdifferenz von wenigstens 3 V Gleichspannung während wenigstens 3 Minuten, und zwar vor der Messung des elektrischen Stromes und Mittel zum Umkehren der Polarität und anschließenden Wechsel des Potentials der Gleichspannungsquelle, wobei die erste Elektrodenanordnung mit dem positiven Anschluss der Spannungsquelle und anschließend mit dem negativen Anschluss der Spannungsquelle oder umgekehrt verbunden werden,
- und wobei sobald die erste Elektrodenanordnung mit dem positiven Anschluss verbunden ist, mittels Anwendungs- und Messmitteln eine Potentialdifferenz von wenigstens 6 V Gleichspannung während höchstens 60 Sekunden angelegt wird.

6. Vorrichtung nach Anspruch 7, wobei die Anwendungs- und Messmittel einen Zeitgeber und eine Messeinheit (70) umfassen.

## Revendications

1. Procédé de test de la continuité d'un revêtement de conteneur comprenant les étapes consistant à :
a) connecter le conteneur (30) à une borne négative d'une alimentation électrique à courant continu (60) ;
b) remplir le conteneur (30) avec une solution d'électrolyte ;
c) immerger une électrode positive (40) dans la solution d'électrolyte ; et
d) appliquer une tension à courant continu et mesurer le courant électrique pour vérifier la qualité du revêtement ;
**caractérisé en ce que** :
la tension à courant continu de l'étape (d) est une tension à courant continu d'au moins +3 volts appliquée pendant une durée minimale de 3 minutes, le courant étant mesuré à la fin de cette durée ;
et **caractérisé par** les étapes supplémentaires consistant à :
e) inverser la polarité de l'alimentation électrique ;
f) connecter le conteneur à la borne positive et l'électrode à la borne négative ; et
g) observer la circulation du courant après un maximum de 60 secondes.

2. Procédé selon la revendication 1, comprenant initialement l'exécution des étapes (f) et (g), et ensuite l'inversion de la polarité de l'alimentation électrique [étape (e)] avant d'exécuter les étapes (a) à (d).

3. Procédé selon la revendication 1 ou la revendication 2, dans lequel la tension à courant continu est appliquée pendant 5 minutes.

4. Procédé selon l'une quelconque des revendications 1 à 3, dans lequel la tension à courant continu est de 4,5 volts.

5. Appareil pour tester la continuité du revêtement dans un conteneur (30), comprenant :
une alimentation électrique à courant continu (60) pour délivrer une différence de potentiel à ses bornes positive et négative ;
une première électrode destinée à la connexion au conteneur ;
une seconde électrode destinée à l'immersion dans l'électrolyte à l'intérieur du conteneur ;
un moyen pour connecter la première électrode à la borne négative de l'alimentation électrique ;
un moyen pour connecter la seconde électrode à la borne positive de l'alimentation électrique ; et
un moyen pour mesurer le courant électrique ;
**caractérisé en ce que** :
l'appareil est destiné à tester la continuité du revêtement dans une pluralité de conteneurs (30), les électrodes sont des rangées d'électrodes, la première rangée d'électrodes étant destinée à la connexion à chacun des conteneurs et la seconde rangée d'électrodes étant destinée à l'immersion dans l'électrolyte à l'intérieur de chaque conteneur respectif ;
et **caractérisé par** :
un moyen pour appliquer une différence de potentiel d'au moins 3 volts à courant continu pendant un minimum de 3 minutes avant de mesurer le courant électrique ; et
un moyen pour inverser la polarité et pour changer simultanément le potentiel de l'alimentation électrique, moyennant quoi la première rangée d'électrodes est connectée à la borne positive de l'alimentation électrique et ensuite à la borne négative de l'alimentation électrique, ou vice versa ;
et dans lequel, lorsque la première rangée d'électrodes est connectée à la borne positive, le moyen d'application et de mesure applique une différence de potentiel d'au moins 6 volts à courant continu et pendant un maximum de 60 secondes.

6. Appareil selon la revendication 7, dans lequel le moyen d'application et de mesure comprend une unité de cadencement et de mesure (70).
